# EUROPEAN PATENT SPECIFICATION

(11) **EP 4 442 908 B1**
(45) Date of publication and mention of the grant of the patent: **24.06.2026**
(21) Application number: 22898935.6
(22) Date of filing: 16.11.2022
(51) Int. Cl.: E02D 15/00, E02D 27/52, E02B 3/06

(54) **METHOD FOR CONSTRUCTING CONCRETE BLOCK STRUCTURE**
VERFAHREN ZUR HERSTELLUNG EINER BETONBLOCKSTRUKTUR
PROCÉDÉ DE CONSTRUCTION D'UNE STRUCTURE EN BLOCS DE BÉTON

(30) Priority: 29.11.2021 KR 20210167113
(43) Date of publication of application: 09.10.2024
(73) Proprietor: Yujoo Co., Ltd., Gijang-gun, Busan 46073 (KR)
(72) Inventor: KIM, Sangki, Busan 47148 (KR)
(74) Representative: Hoefer & Partner Patentanwälte mbB
(86) International application number: PCT/KR2022/018052
(87) International publication number: WO 2023/096253

(56) References cited:
- AU-A1- 2020 229 253
- KR-A- 20090 068 096
- KR-A- 20110 116 262
- KR-B1- 101 355 805
- KR-B1- 102 022 341
- KR-B1- 102 191 675
- KR-B1- 102 310 126
- KR-B1- 102 401 212

## Description

### Technical Field

The present disclosure relates to a method for constructing a concrete block structure installed on land or at sea to form various structures and, more particularly, to a method for constructing a concrete block structure which is installed underwater or on the surface of the water for various purposes, such as a concrete structure installed underwater such as a berthing facility for a harbor, a wave-dissipating structure installed on the coast, and a breakwater, or a concrete structure floating on the surface of the water such as a platform for wind power generation.

### Background Art

An underwater concrete structure is installed for various purposes, such as a berthing facility for a harbor, a wave-dissipating structure installed on the coast, and a breakwater. Document KR 102 191 675 B1 discloses a method for constructing a concrete block structure.

Meanwhile, a widely known construction technique for the construction of underwater structures is a large caisson method. The large caisson method has the advantage of being able to withstand big waves, but it requires high costs for transportation and construction and has various constraints, since a large caisson which is very huge structure is required to be fabricated on land, transported to an installation point, and then installed underwater.

In order to solve the problems of this large caisson method, the present inventor proposed a method of forming an underwater concrete block structure by stacking small concrete blocks in multiple layers according to the depth of water.

The present inventor's Korean Patent No. 10-1355805 (registered on Jan. 15, 2014) entitled "Underwater Concrete Block Structure and Construction Method thereof" discloses a technique in which a concrete column is formed in a waterproof membrane and an upper concrete block and a lower concrete block are coupled together in a structural integrity by concrete columns, thereby having sufficient structural stability even in the waves caused by large typhoons.

In the prior art, the upper concrete block and the lower concrete block are structurally integrated with each other by the concrete column, but the reinforcing bars of the concrete column and the reinforcing bars of the concrete block located below are not connected to each other.

In such a structure, when a concrete block structure receives strong force from a side, the lower part of the concrete column may be a weak point.

The present disclosure is proposed to further improve the prior art.

Meanwhile, offshore concrete structures are fabricated and used for various purposes.

Offshore concrete structures may be concrete structures that float on a water surface, such as wind power generation platforms, or concrete structures that sink in the water for such purposes as those of breakwaters or anchors.

In general, a large concrete structure is generally fabricated with a caisson structure.

When such a large concrete structure is fabricated on land, it is very difficult to move the concrete structure fabricated on land to the sea due to weight of the concrete structure.

As a technology to solve this problem, a method of fabricating a floatable large concrete structure on a large barge has recently been used. In this case, not only is there the inconvenience of fabricating a concrete structure on a large barge, but there is also the problem of having to use an expensive large barge for a very long period of time.

Meanwhile, Korean Patent No. 10-2310126 entitled "METHOD OF CONSTRUCTING UNDERWATER CONCRETE BLOCK STRUCTURE" (registered on September 30, 2021), Korean Patent No. 10-2310131 entitled "FLOATABLE CONCRETE BLOCK STRUCTURE AND FABRICATING METHOD THEREFOR" (registered on September 30, 2021), and Korean Patent No. 10-2292821 entitled "FLOATABLE CONCRETE BLOCK STRUCTURE AND FABRICATING METHOD THEREFOR" (registered on August 18, 2021) as prior arts of the present inventor have been proposed, and these prior arts discloses a technique in which after a first concrete block in which a column rebar assembly is formed is installed, a second concrete block in which a through hole is formed is installed on the upper side of the first concrete block, and concrete is poured into a concrete-column continuous hole formed by the through hole into which the column rebar assembly is inserted so as to form a concrete column in which the column rebar assembly and the poured concrete are integrated with each other.

These prior arts have the risk that seawater mixes with concrete when pouring the concrete to form a concrete column.

### Disclosure

### Technical Problem

The present disclosure has been made to solve the above problems occurring in the prior art, and is intended to propose a method for constructing a concrete block structure, in which a concrete column is formed by concrete poured into a tubular waterproof membrane so that the concrete column can be formed in the same way as the land environment, thereby allowing the concrete column to be firmly formed.

### Technical Solution

In order to accomplish the above objectives, the present disclosure provides a method for constructing a concrete block structure, the method including: a first concrete block assembly installation step of installing a first concrete block assembly in which a first concrete block comprising a first concrete block body and a column rebar assembly extending vertically upward from a lower part thereof connected to an inside of the first concrete block body and protruding upward from the first concrete block body, a guide pole comprising a guide pipe extending vertically, and a tubular waterproof membrane which has a shape of a tube with open upper and lower parts and extends vertically along an inside of the guide pipe and has a lower end arranged by being bent to an outside of the guide pipe are temporarily assembled with each other, wherein the column rebar assembly extends vertically upward along an inside of the tubular waterproof membrane, and the guide pipe is temporarily fixed on an upper surface of the first concrete block body; a second concrete block installation step of installing a second concrete block comprising a second concrete block body having a through hole extending vertically such that a concrete block assembly is formed by installing the second concrete block on the first concrete block so that the guide pole is inserted into the through hole of the second concrete block after the first concrete block assembly installation step, wherein the concrete block assembly has a concrete-column continuous hole comprising the through hole and having a closed lower end; and a concrete column formation step of forming a concrete column by pouring concrete into the tubular waterproof membrane and removing the guide pole to form the concrete column in which the column rebar assembly and the poured concrete are integrated with each other while extending vertically along the inside of the tubular waterproof membrane in the concrete-column continuous hole after the second concrete block installation step, wherein the first concrete block and the second concrete block are coupled to each other by the concrete column to form a concrete block structure.

In the above, a watertight packing is preferably provided on a lower end of the guide pipe so that water is prevented from being introduced into the guide pole from the outside.

In the above, it is preferable that the column rebar assembly has a length to pass through the concrete-column continuous hole and protrude upward from the concrete-column continuous hole, and a cap concrete formation step of forming a cap concrete on the concrete block assembly after the concrete column formation step so that an upper part of the column rebar assembly is connected to an inside of the cap concrete is comprised.

### Advantageous Effects

As described above, according to the present disclosure, a concrete column is formed by concrete poured into a tubular waterproof membrane so that the concrete column can be formed in the same way as the land environment, thereby allowing the concrete column to be firmly formed.

### Description of Drawings

FIGS. 1 to 8 are views sequentially illustrating a method for constructing a concrete block structure according to an embodiment of the present disclosure,
FIG. 9 is a sectional view of a guide pole of FIG. 2,
FIG. 10 is an exploded perspective view of the guide pole of FIG. 9,
FIG. 11 is a sectional view of a state in which a tubular waterproof membrane is coupled to a guide pipe of FIG. 2,
FIG. 12 is a perspective view of a first concrete block assembly of FIG. 3,
FIG. 13 is a perspective view of a second concrete block of FIG. 5, and
FIG. 14 is a sectional view illustrating a state in which concrete block assemblies of FIG. 5 are continuously disposed horizontally.

### Best Mode

Below, with reference to the attached drawings, embodiments of the present disclosure will be described in detail so that those skilled in the art can easily implement the embodiments. However, the present disclosure may be implemented in several different forms and is not limited to the embodiments described herein. In order to clearly explain the present disclosure in the drawings, parts unrelated to the description were omitted, and similar drawing numbers were assigned to similar parts throughout the specification.

Throughout the specification, when a part is said to "include" a certain element, this means that it may further include other elements rather than excluding other elements, unless specifically stated to the contrary.

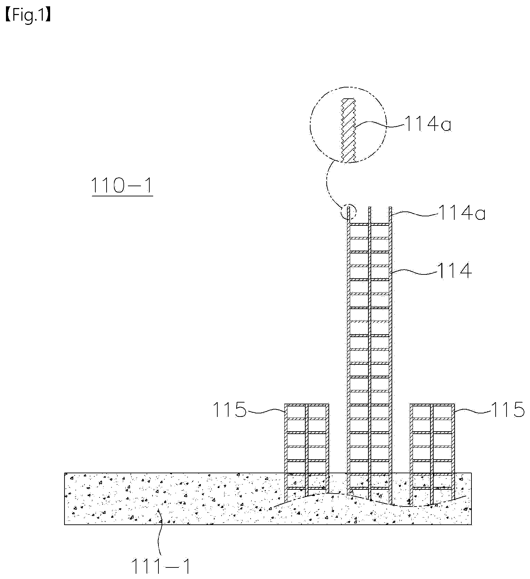

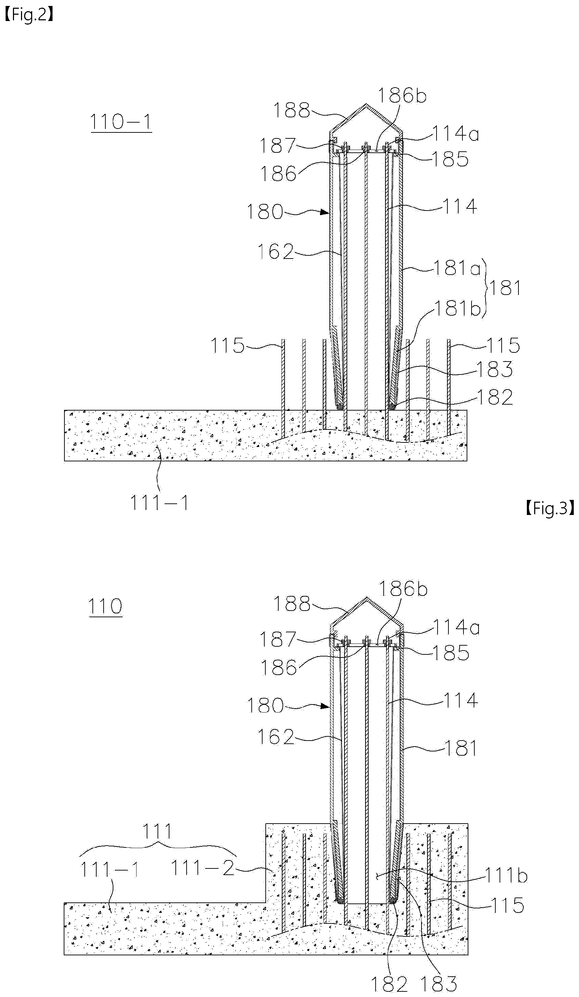

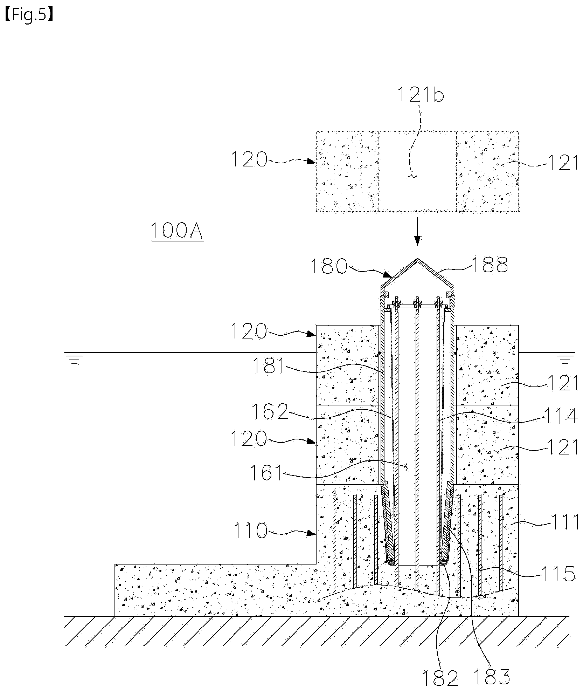

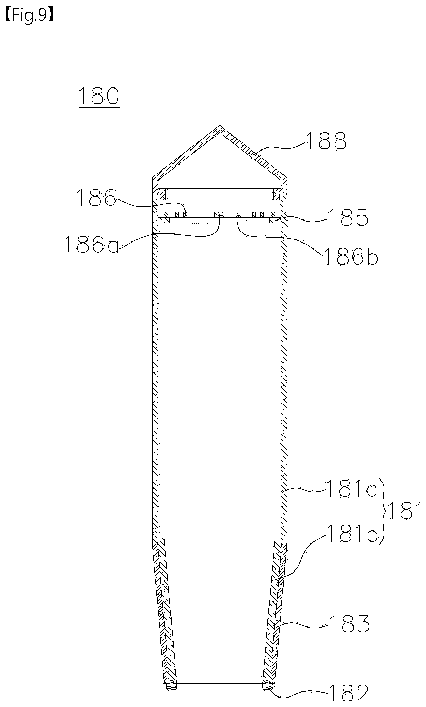

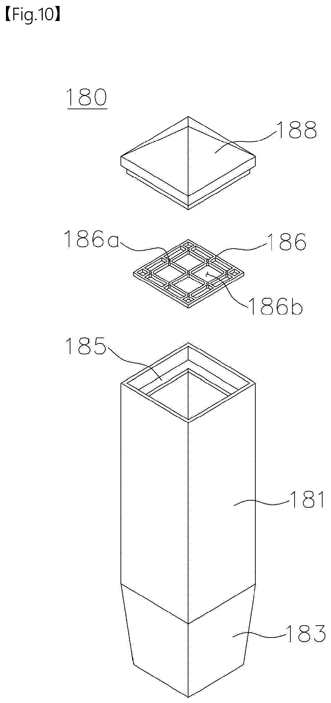

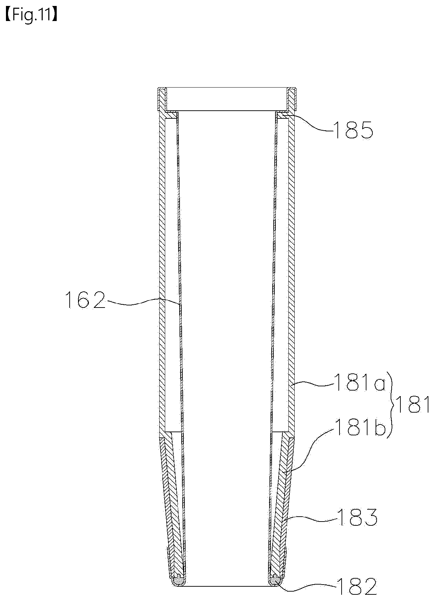

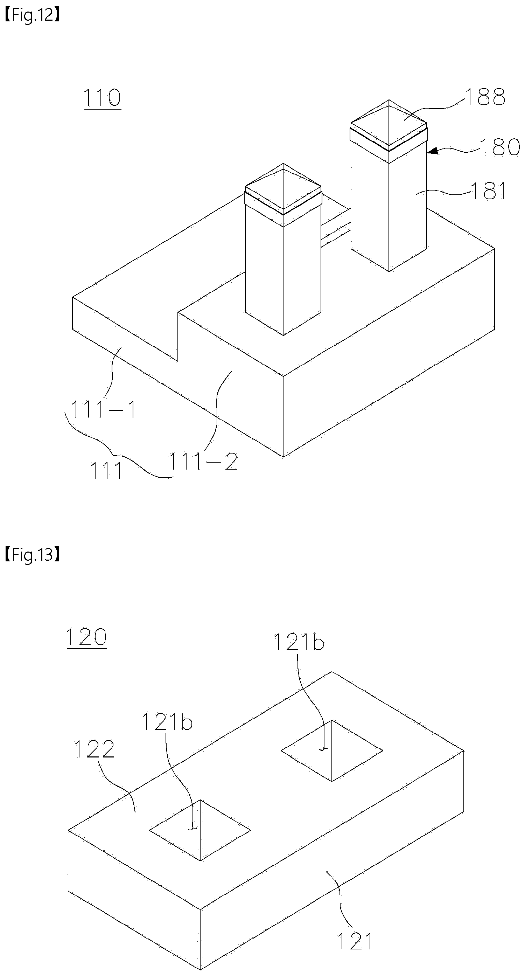

FIGS. 1 to 8 are views sequentially illustrating a method for constructing a concrete block structure according to an embodiment of the present disclosure, FIG. 9 is a sectional view of a guide pole of FIG. 2, FIG. 10 is an exploded perspective view of the guide pole of FIG. 9, FIG. 11 is a sectional view of a state in which a tubular waterproof membrane is coupled to a guide pipe of FIG. 2, FIG. 12 is a perspective view of a first concrete block assembly of FIG. 3, and FIG. 13 is a perspective view of a second concrete block of FIG. 5.

### (1) A concrete block for a bottom fabrication step

As illustrated in FIG. 1, the concrete block 110-1 for a bottom is fabricated.

The concrete block 110-1 for a bottom includes a concrete block body 111-1 for a bottom, a column rebar assembly 114, and supplementary rebar assemblies 115.

In this embodiment, the concrete block body 111-1 for a bottom is a rectangular concrete block with a relatively thin thickness.

In the concrete block body 111-1 for a bottom, the column rebar assembly 114 and the supplementary rebar assemblies 115 are provided to protrude upward from the concrete block body 111-1.

In this embodiment, the column rebar assembly 114 and the supplementary rebar assemblies 115 are located on one side of the concrete block body 111-1 for a bottom in the directions of left and right.

In this embodiment, two separate column rebar assemblies 114 are provided, and supplementary rebar assemblies 115 are arranged to surround these column rebar assemblies 114 (see FIG. 12).

The column rebar assembly 114 has a lower part connected to the inside of the concrete block body 111-1 for a bottom (specifically, the internal reinforcing bars of the concrete block body 111-1 for a bottom), and extends vertically upward from the lower part to protrude upward from the concrete block body 111-1 for a bottom.

In the column rebar assembly 114, vertical reinforcing bars extending in vertical directions and horizontal reinforcing bars extending in horizontal directions are coupled to each other.

Meanwhile, the upper end part of each of the vertical reinforcing bars of the column rebar assembly 114 is threaded to have a male threaded portion 114a.

The supplementary rebar assembly 115 has a lower part connected to the inside of the concrete block body 111-1 for a bottom (specifically, the internal reinforcing bars of the concrete block body 111-1 for a bottom), and extends vertically upward from the lower part to protrude upward from the concrete block body 111-1 for a bottom.

In the supplementary rebar assembly 115, vertical reinforcing bars extending in vertical directions and horizontal reinforcing bars extending in horizontal directions are coupled to each other.

Meanwhile, the protruding height of the supplementary rebar assembly 115 is lower than the protruding height of the column rebar assembly 114.

In addition, the supplementary rebar assemblies 115 are arranged to surround the column rebar assembly 114.

In the drawings below, for the ease of understanding of the drawings, only vertical reinforcing bars are illustrated and horizontal reinforcing bars are omitted in the column rebar assembly 114 and the supplementary rebar assembly 115.

With this structure, a gap between the supplementary rebar assembly 115 and the column rebar assembly 114 can be minimized. That is, the gap between the supplementary rebar assembly 115 and the column rebar assembly 114 is sufficient to be a gap into which the guide pole 180 to be described later can be inserted.

Meanwhile, each of the supplementary rebar assembly 115 and the column rebar assembly 114 may have only a portion of a lower part prefabricated and be installed in advance in the concrete block body 111-1 for a bottom when the concrete block body 111-1 for a bottom is fabricated, and after fabricating the concrete block body 111-1 for a bottom, the upper part of each of the supplementary rebar assembly 115 and the column rebar assembly 114 may be fabricated and assembled with the lower part installed in advance.

### (2) A guide pole installation step

After the concrete block for a bottom fabrication step, as illustrated in FIG. 2, the guide pole 180 to which the tubular waterproof membrane 162 is coupled is installed on the upper part of the concrete block body 111-1 for a bottom.

In FIG. 2, the guide pole 180 includes a guide pipe 181, a watertight packing 182, a separation auxiliary cover 183, a protruding support 185, a rebar fixer 186, a fixing nut 187, and an upper-side insertion guide part 188.

FIG. 9 illustrates sectional conceptual diagram of the guide pole 180, and FIG. 10 illustrates the exploded perspective view of the guide pole 180.

FIGS. 9 and 10 illustrate the guide pole 180 to which the tubular waterproof membrane 162 is not coupled.

The guide pipe 181 extends in the vertical direction. In this embodiment, the guide pipe 181 has the shape of a quadrangular pipe but may be variously modified.

The guide pipe 181 is divided into an upper pipe 181a and a lower pipe 181b, wherein the upper pipe 181a extends vertically from the upper end of the lower pipe, and the lower pipe 181b extends downward to incline inward from the lower end of the upper pipe 181a.

That is, the lower pipe 181b has a cross-sectional area decreasing gradually toward the lower side.

In addition, the separation auxiliary cover 183 is provided on the outer surface of the lower pipe 181b to cover the outer surface of the lower pipe 181b.

The separation auxiliary cover 183 prevents the direct contact of the lower pipe 181b made of metal with a concrete wall 111-2 for reinforcement to be described later so that the guide pole 180 is easily separated from the concrete wall 111-2 for reinforcement.

As the separation auxiliary cover 183, an elastic rubber plate, a Styrofoam plate, or a foam rubber plate, etc. may be used.

Meanwhile, the lower end of the upper pipe 181a (that is, the upper end of the lower pipe 181b) is located higher than the upper end of the supplementary rebar assembly 115. This is intended to ensure that the separation auxiliary cover 183 has a higher height than the height of the concrete wall 111-2 for reinforcement, which will be described later.

The watertight packing 182 is provided on the lower end of the guide pipe 181, specifically, on the lower end of the lower pipe 181b.

The watertight packing 182 is intended to prevent water from being introduced into the guide pole 180 from the outside when the guide pole 180 is installed.

The protruding support 185 is provided inside the upper end part of the guide pipe 181, wherein the rebar fixer 186 is arranged horizontally on the upper part of the protruding support 185.

The rebar fixer 186 is seated on the upper surface of the protruding support 185, and further, may be separated from the protruding support 185.

The rebar fixer 186 has a plurality of rebar penetration holes 186a and a plurality of openings 186b for concrete pouring.

Meanwhile, the tubular waterproof membrane 162 is installed on the guide pole 180.

Accordingly, when installing the guide pipe 181, the tubular waterproof membrane 162 is installed together with the guide pipe 181.

The tubular waterproof membrane 162, which has the shape of a tube having open upper and lower parts, extends up and down along the inside of the guide pipe 181, and the lower end part of the tubular waterproof membrane 162 is arranged by being bent to the outside of the guide pipe 181. That is, since the upper part of the tubular waterproof membrane 162 is open, concrete can be poured thereinto. In addition, since the lower part of the tubular waterproof membrane 162 is open, the column rebar assembly can be inserted thereinto.

The guide pole 180 is an element that will be removed later, but the tubular waterproof membrane 162 is left in the concrete block structure and contributes to forming a concrete column 160.

That is, the tubular waterproof membrane 162 can be separated from the guide pole 180.

A method of installing such a guide pole 180 will be described.

The tubular waterproof membrane 162 is installed inside the guide pipe 181.

FIG. 11 is a sectional view of a state in which the tubular waterproof membrane 162 is coupled to the guide pipe 181.

The column rebar assembly 114 is inserted into the tubular waterproof membrane 162 installed inside the guide pipe 181, and the tubular waterproof membrane 162 and the guide pipe 181 are installed on the upper part of the concrete block body 111-1 for a bottom such that the supplementary rebar assembly 115 is arranged outside the guide pipe 181.

The tubular waterproof membrane 162 and the guide pipe 181 are installed, the vertical reinforcing bars of the column rebar assembly 114 passes through the rebar penetration holes 186a of the rebar fixer 186, the edge of the rebar fixer 186 is supported on the protruding support 185, and then the fixing nut 187 is engaged with the male threaded portion 114a of the column rebar assembly 114. In this case, while the fixing nut 187 presses the rebar fixer 186, the column rebar assembly 114 is temporarily coupled to the rebar fixer 186, and the guide pipe 181 is temporarily fixed to the concrete block body 111-1 for a bottom.

When the guide pipe 181 is temporarily fixed, the watertight packing 182 is compressed and prevents water from being introduced into the guide pole 180.

Next, the upper-side insertion guide part 188 is installed on the upper end of the guide pipe 181.

The upper-side insertion guide part 188 is located on the upper end of the guide pipe 181 and has an upwardly tapered shape.

The upper-side insertion guide part 188 is coupled detachably to the guide pipe 181 and has a guide protrusion formed on the lower end of the upper-side insertion guide part 188 so that the guide protrusion is inserted into the upper end part of the guide pipe 181.

The upper-side insertion guide part 188 is intended to guide the installation of a second concrete block 120, which will be described later.

### (3) A concrete wall for reinforcement formation step

After the guide pole installation step, as illustrated in FIGS. 3 and 12, the concrete wall 111-2 for reinforcement is formed.

The concrete wall 111-2 for reinforcement is formed such that the supplementary rebar assembly 115 protruding upward from the concrete block body 111-1 for a bottom is embedded in the concrete wall 111-2 for reinforcement, and a portion in which the column rebar assembly 114 is located is formed as a column coupling groove 111b which is an empty space.

Due to the guide pole 180, concrete does not flow into the portion in which the column rebar assembly 114 is located, and thus the concrete wall 111-2 for reinforcement has the column coupling groove 111b through which the column rebar assembly 114 passes and with which the guide pole 180 (specifically, the separation auxiliary cover 183) is in contact.

Such a concrete wall 111-2 for reinforcement covers a portion of the upper surface of the concrete block body 111-1 for a bottom and is integrated with the concrete block body 111-1 for a bottom by the supplementary rebar assembly 115, and thus the concrete block body 111-1 for a bottom and the concrete wall 111-2 for reinforcement constitute a first concrete block body 111.

A concrete block including the first concrete block body 111 and the column rebar assembly 114 is referred to as the first concrete block 110.

The shape of the first concrete block 110 in this embodiment is only an example, and various modifications thereof are possible.

### (4) A first concrete block assembly installation step

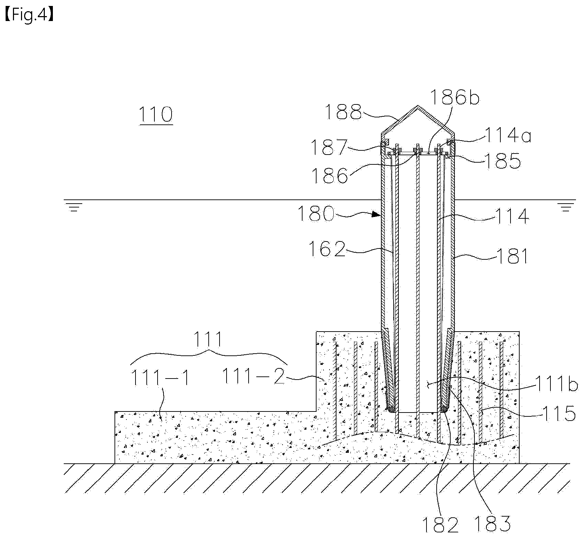

After the concrete wall for reinforcement formation step, as illustrated in FIG. 4, the first concrete block 110 on which the guide pole 180 is installed, that is, the first concrete block assembly is installed.

In this embodiment, the first concrete block assembly is installed underwater. Accordingly, the first concrete block 110 is installed on an underwater ground.

### (5) A second concrete block installation step

After the first concrete block assembly installation step, as illustrated in FIG. 5, the second concrete block 120 is installed on the first concrete block 110 to form a concrete block assembly 100A.

First, the structure of the second concrete block 120 will be described with reference to FIG. 13.

The second concrete block 120 includes a second concrete block body 121, wherein the second concrete block body 121, which has a rectangular parallelepiped shape, has two through holes 121b extending in vertical directions.

The cross-sectional shape of each of the through holes 121b is the shape of a quadrangular cross section corresponding to the cross-sectional shape of the guide pipe 181, and the cross-sectional area of the through hole 121b is larger than the cross-sectional area of the upper pipe 181a.

Next, the process of installing the second concrete block 120 will be described.

As illustrated in FIG. 5, the second concrete block 120 is installed so that the column rebar assembly 114 of the first concrete block 110 installed underwater is inserted into the through holes 121b of the second concrete block 120.

More specifically, the second concrete block 120 is lowered from the upper side of the guide pole 180 to the lower side thereof so that the guide pole 180 installed in the first concrete block 110 is inserted into the through hole 121b of the second concrete block 120.

In this case, the upper-side insertion guide part 188 of the guide pole 180 guides the seating position of the second concrete block 120 while being easily inserted into the through hole 121b of the second concrete block 120.

A plurality of second concrete blocks 120 may be installed in multiple layers on the first concrete block 110 as illustrated in FIG. 5, or in another embodiment, a second concrete block 120 may be installed in one layer on the first concrete block 110.

A concrete-column continuous hole 161 having a closed lower end is formed in the concrete block assembly 100A formed according to the installation of the second concrete block 120.

The concrete-column continuous hole 161 includes the through hole 121b of the second concrete block 120. In this embodiment, the concrete-column continuous hole 161 is formed by the through hole 121b of the second concrete block 120 and the column coupling groove 111b of the first concrete block 110.

In the concrete block assembly 100A, water is present in the concrete-column continuous hole 161, but water is not present in the guide pole 180 due to the tubular waterproof membrane 162 and the watertight packing 182, and thus water is present only in space outside the guide pole 180.

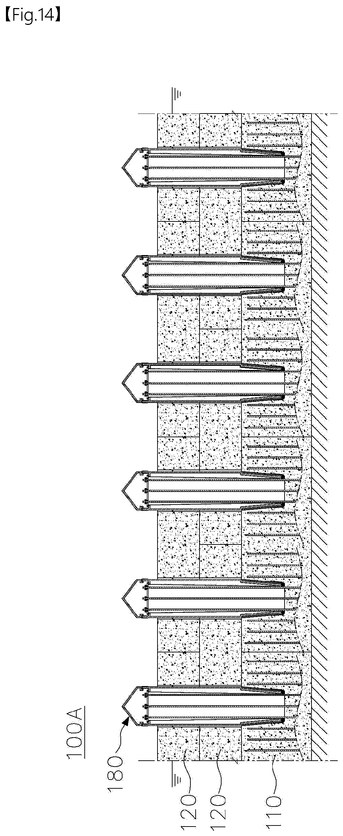

As illustrated in FIG. 14, in the concrete block assembly 100A, a plurality of first concrete blocks 110 is successively arranged in a horizontal direction, and further, a plurality of second concrete blocks 120 is successively arranged in the horizontal direction.

### (6) A concrete column formation step

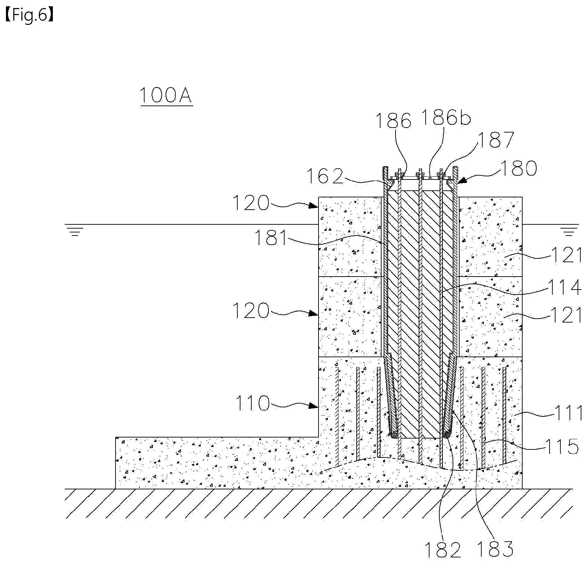

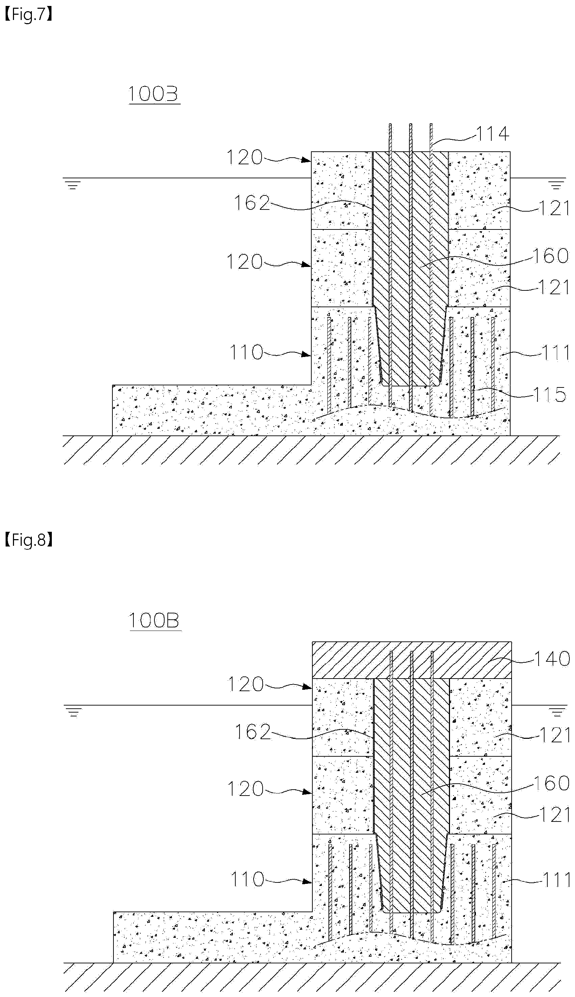

After the second concrete block installation step, as illustrated in FIGS. 6 and 7, concrete is poured into the tubular waterproof membrane 162 located in the concrete-column continuous hole 161 and the guide pole 180 is removed to form the concrete column 160 in which the column rebar assembly 114 and the poured concrete are integrated with each other while extending vertically along the inside of the tubular waterproof membrane 162 in the concrete-column continuous hole 161.

The first concrete block 110 and the second concrete block 120 are coupled to each other by the concrete column 160 to primarily form the concrete block structure 100B.

Specific work sequence will be described.

First, the upper-side insertion guide part 188 is removed from the guide pole 180.

Next, concrete is poured into the tubular waterproof membrane 162 through the openings 186b for concrete pouring of the rebar fixer 186 (see FIG. 6).

After the concrete pouring, the fixing nut 187 is disengaged to remove the rebar fixer 186 upward, and after removing the rebar fixer 186, the guide pipe 181 is removed upward. In this case, the tubular waterproof membrane 162 is left in the concrete-column continuous hole 161 (see FIG. 7).

When removing the guide pipe 181, the lower part of the guide pipe 181 can be easily separated from the concrete wall 111-2 for reinforcement due to the separation auxiliary cover 183.

Meanwhile, when the guide pipe 181 is removed, the tubular waterproof membrane 162 is brought into close contact with the first concrete block 110 and the second concrete block 120 by the pressure of poured concrete, and accordingly, water (water present outside the tubular waterproof membrane 162) inside the concrete-column continuous hole 161 is pushed out.

Accordingly, the concrete column 160 is formed by the integration of the column rebar assembly 114 with the poured concrete along the inside of the tubular waterproof membrane 162 in the concrete-column continuous hole 161.

Meanwhile, since there is no water inside the tubular waterproof membrane 162 immediately before pouring concrete, the pouring of concrete for forming the concrete column 160 can be performed in the same environment as the land environment.

That is, since the concrete column 160 is formed inside the tubular waterproof membrane 162, there is no need to worry about mixing with external seawater.

After the concrete column 160 is formed, the upper end part of the tubular waterproof membrane 162 exposed to the outside is removed.

According to an embodiment, after removing the guide pole 180, a concrete block fixer (not shown) can be installed on the male threaded portion 114a of the column rebar assembly 114 to fix the second concrete block 120 located at the uppermost part. In this way, when the concrete block assembly 100A is fixed by using the concrete block fixer (not shown), the structural stability of the concrete block assembly 100A can be increased until the concrete column 160, which will be described later, is completely formed.

Meanwhile, the upper end part of the column rebar assembly 114 does not form the concrete column 160 and protrudes upward from the concrete column 160.

That is, the column rebar assembly 114 of the first concrete block 110 has a length to pass through the concrete-column continuous hole 161 and protrude upward from the concrete-column continuous hole 161.

### (7) A cap concrete formation step

After the concrete column formation step, as illustrated in FIG. 8, the cap concrete 140 is formed on the concrete block assembly 100A to complete an underwater concrete block structure 100B.

In this case, the upper part of the column rebar assembly 114 protruding upward from the concrete-column continuous hole 161 is connected to the internal rebar of the cap concrete 140.

In the concrete block structure 100B constructed through this construction method, the concrete column 160 is connected to the first concrete block body 111 by the column rebar assembly 114.

In addition, the lower part of the concrete column 160 is supported by the concrete wall 111-2 for reinforcement of the first concrete block body 111.

In addition, when forming the concrete wall 111-2 for reinforcement, the guide pole 180 is used, so a gap between the supplementary rebar assembly 115 and the column rebar assembly 114 can be minimized.

In addition, since the concrete column 160 is formed inside the tubular waterproof membrane 162, there is no concern about external seawater mixing with the concrete column 160.

Therefore, the lower part of the concrete column 160, which may be the most vulnerable part of the concrete block structure 100B, is formed very firmly, thereby significantly improving the rigidity of the entirety of the concrete block structure.

Such a structure of the present disclosure may be variously applied to "FLOATABLE CONCRETE BLOCK STRUCTURE AND FABRICATING METHOD THEREFOR" (registered on September 30, 2021) in Korean Patent No. 10-2310131 and "FLOATABLE CONCRETE BLOCK STRUCTURE AND FABRICATING METHOD THEREFOR" (registered on August 18, 2021) in Korean Patent No. 10-2292821, etc.

The description of the present disclosure described above is for illustrative purposes, and it can be understood that anyone with ordinary knowledge in the technical field to which the present disclosure belongs can easily modify the embodiments into other specific forms without changing the technical idea or essential features of the present disclosure. Therefore, the embodiments described above should be understood in all respects as illustrative and not restrictive. For example, each component described as unitary may be implemented in a distributed manner, and similarly, components described as distributed may also be implemented in a combined form.

It should be interpreted that the scope of the present disclosure is indicated by the claims described later rather than the detailed description.

### Industrial Applicability

The present disclosure can be applied to a concrete block structure which is installed underwater or on the surface of the water for various purposes, such as a concrete structure installed underwater such as a berthing facility for a harbor, a wave-dissipating structure installed on the coast, and a breakwater, or a concrete structure floating on the surface of the water such as a platform for a wind power generation.

## Claims

1. A method for constructing a concrete block structure, the method comprising:
a first concrete block assembly (100A) installation step of installing a first concrete block assembly in which a first concrete block (110) comprising a first concrete block body (111) and a column rebar assembly (114) extending vertically upward from a lower part thereof connected to an inside of the first concrete block body and protruding upward from the first concrete block body, a guide pole (180) comprising a guide pipe (181) extending vertically, and a tubular waterproof membrane (162) which has a shape of a tube with open upper and lower parts and extends vertically along an inside of the guide pipe and has a lower end arranged by being bent to an outside of the guide pipe are temporarily assembled with each other, wherein the column rebar assembly extends vertically upward along an inside of the tubular waterproof membrane, and the guide pipe is temporarily fixed on an upper surface of the first concrete block body;
a second concrete block installation step of installing a second concrete block (120) comprising a second concrete block body (121) having a through hole extending vertically such that a concrete block assembly is formed by installing the second concrete block on the first concrete block so that the guide pole is inserted into the through hole of the second concrete block after the first concrete block assembly installation step, wherein the concrete block assembly has a concrete-column continuous hole comprising the through hole and having a closed lower end; and
a concrete column formation step of forming a concrete column by pouring concrete into the tubular waterproof membrane and removing the guide pole to form the concrete column in which the column rebar assembly and the poured concrete are integrated with each other while extending vertically along the inside of the tubular waterproof membrane in the concrete-column continuous hole after the second concrete block installation step, wherein the first concrete block and the second concrete block are coupled to each other by the concrete column to form a concrete block structure.

2. The method of claim 1, wherein a watertight packing is provided on a lower end of the guide pipe so that water is prevented from being introduced into the guide pole from the outside.

3. The method of claim 1, wherein the column rebar assembly has a length to pass through the concrete-column continuous hole and protrude upward from the concrete-column continuous hole, and a cap concrete formation step of forming a cap concrete on the concrete block assembly after the concrete column formation step so that an upper part of the column rebar assembly is connected to an inside of the cap concrete is comprised.

## Patentansprüche

1. Verfahren zum Bauen einer Betonblockstruktur, wobei das Verfahren umfasst:
einen ersten Betonblockanordnung (100A)-Installationsschritt des Installierens einer ersten Betonblockanordnung, in der ein erster Betonblock (110), der einen ersten Betonblockkörper (111) und eine Säulenbewehrungsanordnung (114) umfasst, die sich von einem unteren Teil davon, der mit einer Innenseite des ersten Betonblockkörpers verbunden ist, vertikal nach oben erstreckt und von dem ersten Betonblockkörper nach oben vorsteht, eine Führungsstange (180), die ein Führungsrohr (181) umfasst, das sich vertikal erstreckt, und eine rohrförmige wasserdichte Membran (162), die eine Form eines Rohrs mit offenen oberen und unteren Teilen aufweist und sich vertikal entlang einer Innenseite des Führungsrohrs erstreckt und ein unteres Ende aufweist, das angeordnet ist, indem es zu einer Außenseite des Führungsrohrs gebogen wird, vorübergehend miteinander montiert werden, wobei sich die Säulenbewehrungsanordnung entlang einer Innenseite der rohrförmigen wasserdichten Membran vertikal nach oben erstreckt und das Führungsrohr vorübergehend an einer oberen Fläche des ersten Betonblockkörpers befestigt wird;
einen zweiten Betonblock-Installationsschritt des Installierens eines zweiten Betonblocks (120), der einen zweiten Betonblockkörper (121) umfasst, der ein Durchgangsloch aufweist, das sich vertikal erstreckt, so dass eine Betonblockanordnung gebildet wird, indem der zweite Betonblock an dem ersten Betonblock installiert wird, so dass die Führungsstange nach dem ersten Betonblockanordnung-Installationsschritt in das Durchgangsloch des zweiten Betonblocks eingeführt wird, wobei die Betonblockanordnung ein durchgehendes Betonsäulenloch aufweist, das das Durchgangsloch umfasst und ein geschlossenes unteres Ende aufweist; und
einen Betonsäulenbildungsschritt des Bildens einer Betonsäule durch Gießen von Beton in die rohrförmige wasserdichte Membran und Entfernen der Führungsstange, um die Betonsäule zu bilden, in der die Säulenbewehrungsanordnung und der gegossene Beton miteinander integriert sind, während sie sich nach dem zweiten Betonblock-Installationsschritt in dem durchgehenden Betonsäulenloch vertikal entlang der Innenseite der rohrförmigen wasserdichten Membran erstrecken, wobei der erste Betonblock und der zweite Betonblock durch die Betonsäule miteinander gekoppelt werden, um eine Betonblockstruktur zu bilden.

2. Verfahren nach Anspruch 1, wobei eine wasserdichte Packung an einem unteren Ende des Führungsrohrs bereitgestellt wird, so dass verhindert wird, dass Wasser von der Außenseite in die Führungsstange eingeführt wird.

3. Verfahren nach Anspruch 1, wobei die Säulenbewehrungsanordnung eine Länge aufweist, um durch das durchgehende Betonsäulenloch hindurchzugehen und von dem durchgehenden Betonsäulenloch nach oben vorzustehen, und ein Kappenbetonbildungsschritt des Bildens eines Kappenbetons an der Betonblockanordnung nach dem Betonsäulenbildungsschritt, so dass ein oberer Teil der Säulenbewehrungsanordnung mit einer Innenseite des Kappenbetons verbunden ist, umfasst ist.

## Revendications

1. Procédé de construction d'une structure de bloc de béton, le procédé comprenant :
une étape d'installation d'un premier ensemble de bloc de béton (100A) consistant à installer un premier ensemble de bloc de béton dans lequel un premier bloc de béton (110) comprenant un premier corps de bloc de béton (111) et un ensemble de barre d'armature de colonne (114) s'étendant verticalement vers le haut à partir d'une partie inférieure de celui-ci reliée à un intérieur du premier corps de bloc de béton et faisant saillie vers le haut à partir du premier corps de bloc de béton, un poteau de guidage (180) comprenant un tuyau de guidage (181) s'étendant verticalement, et une membrane tubulaire étanche à l'eau (162) qui a une forme de tube avec des parties supérieure et inférieure ouvertes et s'étend verticalement le long d'un intérieur du tuyau de guidage et a une extrémité inférieure agencée en étant pliée vers un extérieur du tuyau de guidage sont temporairement assemblés l'un avec l'autre, dans lequel l'ensemble de barre d'armature de colonne s'étend verticalement vers le haut le long d'un intérieur de la membrane tubulaire étanche à l'eau, et le tuyau de guidage est temporairement fixé sur une surface supérieure du premier corps de bloc de béton ;
une seconde étape d'installation de bloc de béton consistant à installer un second bloc de béton (120) comprenant un second corps de bloc de béton (121) ayant un trou traversant s'étendant verticalement de sorte qu'un ensemble de bloc de béton est formé en installant le second bloc de béton sur le premier bloc de béton de sorte que le poteau de guidage est inséré dans le trou traversant du second bloc de béton après l'étape d'installation du premier ensemble de bloc de béton, dans lequel l'ensemble de bloc de béton a un trou continu de colonne de béton comprenant le trou traversant et ayant une extrémité inférieure fermée ; et
une étape de formation de colonne de béton consistant à former une colonne de béton en versant du béton dans la membrane tubulaire étanche à l'eau et en retirant le poteau de guidage pour former la colonne de béton dans laquelle l'ensemble de barre d'armature de colonne et le béton versé sont intégrés l'un avec l'autre tout en s'étendant verticalement le long de l'intérieur de la membrane tubulaire étanche à l'eau dans le trou continu de colonne de béton après la seconde étape d'installation de bloc de béton, dans lequel le premier bloc de béton et le second bloc de béton sont couplés l'un à l'autre par la colonne de béton pour former une structure de bloc de béton.

2. Procédé selon la revendication 1, dans lequel une garniture étanche à l'eau est prévue sur une extrémité inférieure du tuyau de guidage de sorte que l'eau est empêchée d'être introduite dans le poteau de guidage à partir de l'extérieur.

3. Procédé selon la revendication 1, dans lequel l'ensemble de barre d'armature de colonne a une longueur pour passer à travers le trou continu de colonne de béton et faire saillie vers le haut à partir du trou continu de colonne de béton, et une étape de formation de béton de chapeau consistant à former un béton de chapeau sur l'ensemble de bloc de béton après l'étape de formation de colonne de béton de sorte qu'une partie supérieure de l'ensemble de barre d'armature de colonne est raccordée à un intérieur du béton de chapeau est comprise.
